## Europäisches Patentamt

(19) **European Patent Office**

**Office européen des brevets**

(11) Publication number: **0 209 610**
**B1**

## EUROPEAN PATENT SPECIFICATION

(45) Date of publication of patent specification: **02.11.88**

(51) Int. Cl.⁴: **G 02 B 21/00**

(21) Application number: **85108984.7**

(22) Date of filing: **18.07.85**

(54) **Head-up display for microscope using remotely controlled instrument.**

(43) Date of publication of application:
**28.01.87 Bulletin 87/05**

(45) Publication of the grant of the patent:
**02.11.88 Bulletin 88/44**

(84) Designated Contracting States:
**BE CH DE FR GB IT LI LU NL SE**

(56) References cited:
**EP-A-0 088 985**
**DE-A-1 772 016**
**DE-B-1 235 006**
**DE-B-2 559 925**
**GB-A-2 138 240**
**US-A-4 160 263**
**US-A-4 202 037**
**US-A-4 274 092**

(73) Proprietor: **Cooper Lasersonics Inc.**
**3420 Central Expressway**
**Santa Clara California 95051 (US)**

(72) Inventor: **Munnerlyn, Charles R.**
**1360 Bedford Avenue**
**Sunnyvale California 94087 (US)**

(74) Representative: **UEXKÜLL & STOLBERG**
**Patentanwälte**
**Beselerstrasse 4**
**D-2000 Hamburg 52 (DE)**

EP 0 209 610 B1

Courier Press, Leamington Spa, England.

## Description

Head-up display of information needed by a person looking through eyepieces is known to be convenient so that the viewer can get the necessary information without looking away from the viewing field. Besides eliminating the interrupting delay in moving back and forth between eyepieces and a separate meter reading, a head-up display is especially convenient for users who normally wear eyeglasses but remove them for viewing through adjusted eyepieces. Turning away from the field of view to observe a meter reading without eyeglasses can add to the delay.

Lensmeters for measuring the diopter value of eyeglasses have included a head-up display of the measured value derived from an engraved scale built into the instrument and lighted so that its reading is imaged in the apparent field of view. The engraving can be made small enough to make the numbers occupy a reasonably small portion of the apparent field.

For instruments that are controlled remotely from a microscope, an optomechanical engraving showing a control setting is not practical. Microsurgery accomplished with a microscope and a surgical laser presents this problem. Laser control settings must be viewed by the surgeon who is otherwise occupied with the surgical field of view available through microscope eyepieces. A head-up display of laser control settings within the apparent field of view of the microscope would be very convenient to the surgeon, but practical problems have stood in the way of solution. For example, an electronic digital display of numbers relevant to a control setting for a remote instrument cannot be imaged directly within the apparent field of a microscope binocular without consuming too much space. Even the small LED's used in hand-held calculators would fill more than half the apparent field of view if as few as three digits were directly displayed. Optically halving the image size of a small LED compatibly with binocular objectives having focal lengths ranging from 100 to 125 millimeters would require a collimating lens with a focal length of about 200 millimeters. A head-up display containing a lens with a 200 millimeter focal length would make the microscope unwieldy and interfere with the reach of the surgeon, even if the path were folded in half.

There has been devised a compact and effective way of displaying control information from a remote instrument within the apparent field of view of a microscope so that the displayed information is suitably sized and positioned, and the system is compactly fitted within conventional microscopes. The system uses a beam splitter positioned in the essentially collimated light region between a microscope objective and image viewing binoculars, and there is disclosed a head-up display system adjacent the beam splitter where it does not take space away from the person using the microscope. The head-up display aims at convenience, compactness, efficiency, and reliability in presenting information from a remotely controlled instrument to the user of a microscope.

US—A—4 274 092 teaches a system of visual feedback of data through the eyepiece of a microscope. This device uses conventional focusing lenses in optical alignment with output from a light emitting diode (LED) display. A conventional mirror directs the output from the LED through an aperture in the side wall of an eyepiece. A beam splitter within the eyepiece receives and redirects the reflected output from the LED. This system has the foregoing disadvantage of failing to reduce the size of the visual display from the LED, thus allowing the field of vision to be obscured.

EP—A—0 088 985 discloses a device for superimposing visual data on the field viewed through a photomicroscope. The device uses conventional mirrors and lenses to focus and project the optical output from a liquid crystal display.

The head-up display presents information relevant to a remote instrument used in association with a microscope having a microscope objective binoculars, and an essentially collimated light region between the microscope objective and the binoculars. A beam splitter is used, and preferably next to that is arranged an electronic digital display relevant to a control setting for the remote instrument. A convex mirror views the digital display, and a folding mirror directs diverging light from the convex mirror toward the beam splitter. A collimating lens collimates diverging light enroute from the folding mirror to the beam splitter, and collimated light from the lens is incident on the beam splitter to position an image of the digital display in a marginal region of the apparent field of one of the binoculars of the microscope. Preferably a pair of digital displays are spaced apart and oriented so that both are viewed by the convex mirror. Then the folding mirror can be arranged between the digital displays to dispose the display images at opposite top and bottom marginal regions of the apparent field of a binocular.

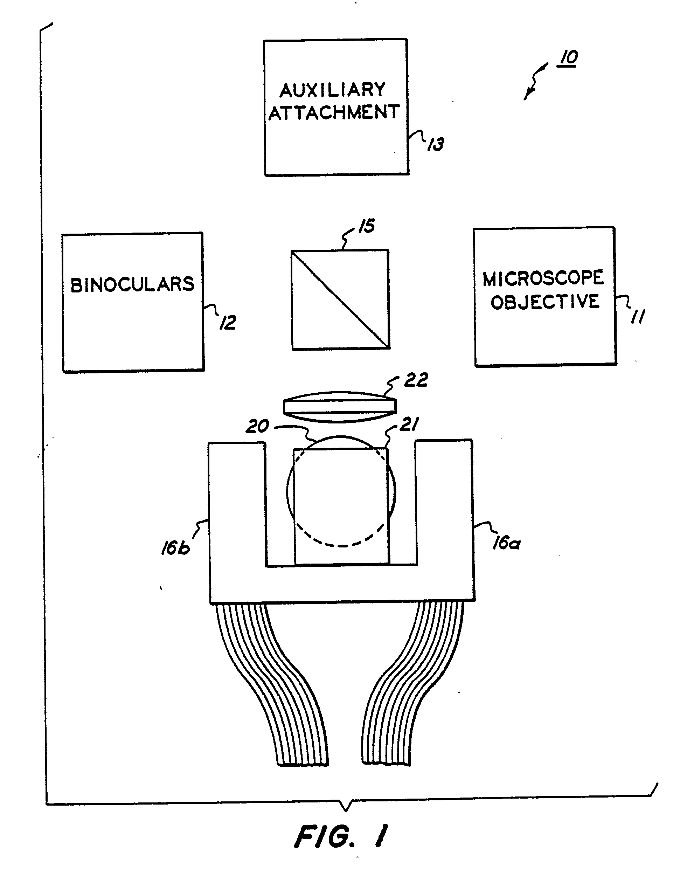

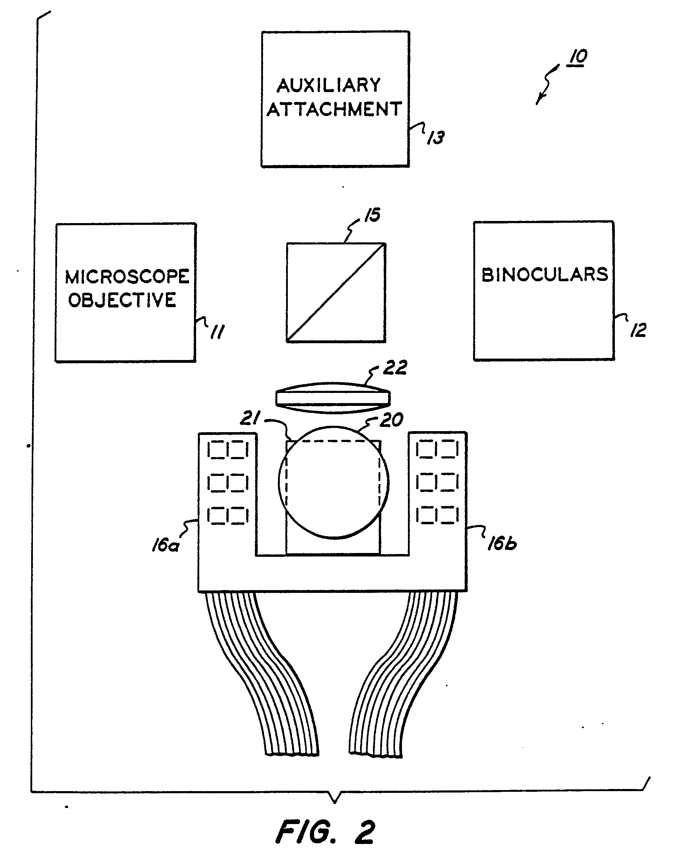

Figures 1 and 2 are respective right and left side schematic views of a preferred embodiment of a microscope embodying the head-up display; and

Figure 3 is a schematic front view of the head-up display of Figures 1 and 2 showing the displayed information in the apparent field of the left binocular of the microscope.

The head-up display is for use with a microscope 10, some of the components of which are schematically shown in the drawings. These include microscope objective 11 for forming an image of a site and binoculars 12 for viewing the image formed by objective 11. Binoculars 12 include eyepieces and binocular objectives for receiving parallel image light achieved by collimating light passing from microscope objective 11 to binoculars 12. Beam splitter 15 is arranged in this region and can be present in existing microscopes for auxiliary attachments 13 to accommodate an additional viewer or a mount for a photographic or video camera, as is generally known. If beam splitter 15 is not already present for an auxiliary attachment 13, beam splitter 15 along with other components for introducing images, may be added for the head-up display.

A pair of control information displays 16a and 16b can be formed by electronically driven devices such as the small LED's used in pocket calculators. These provide numbers relevant to control settings for a remote instrument used in association with microscope 10. Such a remotely controlled instrument can be a laser used in microsurgery, but other remote instruments having control settings to be made visible along with a site viewed by the microscope are also possible. Moreover, single and multiple numbers of different digit lengths and alphanumeric information can be used in this head-up display.

To reduce the image size of digital displays 16a and 16b, a convex mirror 20 can be arranged for viewing both displays 16a and b and diverging the light from displays 16 so that they appear to recede from the viewer and diminish in size. A suitable radius of curvature for mirror 20 is 12.5 millimeters.

A flat folding mirror 21, preferably positioned between digital displays 16a and 16b, reflects diverging light from convex mirror 20 upward toward the bottom of beam splitter 15. A collimating lens 22 collimates the diverging light enroute from mirror 21 to beam splitter 15, which reflects a portion of the head-up display light to binoculars 12 and can also transmit another portion through to auxiliary attachment 13. Collimating lens 22 can have a focal length of 50 millimeters.

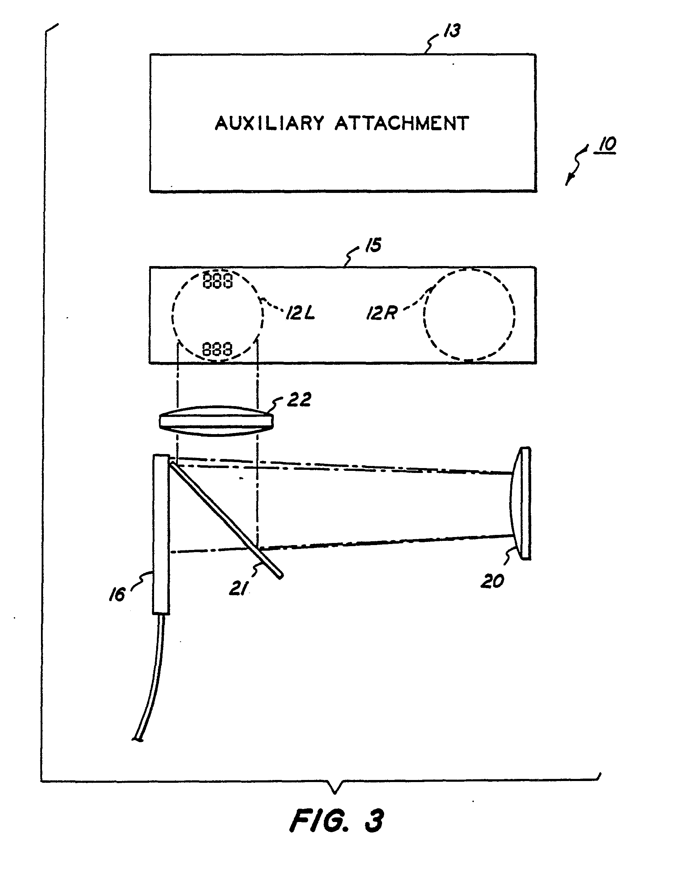

The three reflections of light from digital displays 16 by convex mirror 20, folding mirror 21, and beam splitter 15 dispose images of displays 16a and b respectively, at bottom and top marginal regions of the apparent field of left binocular 12L as best shown in Figure 3. Of course, head-up display images can also be displayed in the apparent field of right binocular 12R, and respective top and bottom images can be reversed.

By such an arrangement, a head-up display is fitted compactly within a small space available near beam splitter 15 where it does not take space away from other functions of microscope 10 and its user.

This system also optically reduces the image of an electronic digital display to a suitably small size and presents it in a marginal region of the apparent field of one of the binoculars where it can be seen without interfering with the view of the site.

## Claims

1. A head-up display of information relevant to a remote instrument used in association with a microscope (10) having a microscope objective (11), binoculars (12), and an essentially collimated light region between said microscope objective (11) and said binoculars (12), said head-up display comprising:

a. a beam splitter (15) arranged between said microscope objective (11) and said binoculars (12);

b. an electronic digital display (16a, 16b) of numbers relevant to a control setting for said remote instrument;

c. said digital display (16a, 16b) being arranged off the optical axis of said microscope (10); characterized by:

d. a convex mirror (20) arranged for viewing said digital display (16a, 16b);

e. a collimating lens (22) arranged for collimating diverging light from said convex mirror (20) enroute to said beam splitter (15); and

f. collimated light from said lens (22) being incident on said beam splitter (15) to position the image of said digital display (16a, 16b) in a marginal region of the apparent field of one of said binoculars (12).

2. The head-up display of claim 1 including a pair of said digital displays (16a, 16b) spaced apart and oriented so that both of said digital displays are viewed by said convex mirror (20).

3. The head-up display of claim 2 including a folding mirror (21) arranged between said pair of digital displays (16a, 16b) for directing diverging light from said convex mirror (20) toward said collimating lens (22).

4. The head-up display of claim 3 wherein said images of said pair of said digital displays (16a, 16b) are disposed at opposite marginal regions of said apparent field.

5. The head-up display of claim 4 wherein said opposite marginal regions are arranged in the top and bottom of said apparent field.

6. The head-up display of claim 1 wherein said collimated light from said lens (22) enters the bottom of said beam splitter (15) and light for an auxiliary attachment (13) exits at the top of said beam splitter (15).

7. The head-up display of any combination of claims 1—6 wherein said remote instrument is a surgical laser.

## Patentansprüche

1. Head-up-Anzeige für Information für ein Ferninstrument, das zusammen mit einem Mikroskop (10) verwendet wird, welches ein Mikroskop-Objektiv (11), ein Binokular (12) und einem im wesentlichen kollimierten Lichtbereich zwischen dem Mikroskopobjektiv (11) und dem Binokular (12) aufweist, wobei die Head-up-Anzeige aufweist:

a. einen Strahlenteiler (15), der zwischen dem Mikroskopobjektiv (11) und dem Binokular (12) angeordnet ist;

b. eine elektronische Digitalanzeige (16a, 16b) von Zahlen, die für eine Steuereinstellung des Ferninstruments relevant sind;

c. wobei die Digitalanzeige (16a, 16b) außerhalb der optischen Achse des Mikroskops (10) angeordnet ist; gekennzeichnet durch:

d. einen Konvexspiegel (20), der zur Betrachtung der Digitalanzeige (16a, 16b) angeordnet ist;

e. eine Kollimierlinse (22), die angeordnet ist, um divergierendes Licht von dem Konvexspiegel (20) auf dem Weg zu dem Strahlenteiler (15) zu kollimieren; und

f. kollimiertes Licht von der Linse (22), das auf den Strahlenteiler (15) fällt, um das Bild der Digitalanzeige (16a, 16b) in einem Randbereich des scheinbaren Feldes von einem Okular des Binokulars (12) zu positionieren.

2. Head-up-Anzeige nach Anspruch 1, mit einem Paar von Digitalanzeigen (16a, 16b), die voneinander beanstandet und so orientiert sind, daß beide Digitalanzeigen von dem Konvexspiegel (22) gesehen werden.

3. Head-up-Anzeige nach Anspruch 2, mit einem Faltspiegel (21), der zwischen dem Paar von Digitalanzeigen (16a, 16b) angeordnet ist, um divergiendes Licht von dem Konvexspiegel (20) auf die Kollimierlinse (22) zu leiten.

4. Head-up-Anzeige nach Anspruch 3, bei der die Bilder des Paares von Digitalanzeigen (16a, 16b) an gegenüberliegenden Randbereichen des scheinbaren Feldes angeordnet sind.

5. Head-up-Anzeige nach Anspruch 4, wobei die gegenüberliegenden Randbereich oben und unten in dem scheinbaren Feld angeordnet sind.

6. Head-up-Anzeige nach Anspruch 1, bei dem das kollimierte Licht von der Linse (22) unter in den Strahlenteiler (15) eintritt und Licht von einer Hilfsanbringung (13) oben aus dem Strahlenteiler (15) austritt.

7. Head-up-Anzeige nach irgendeiner Kombination der Ansprüche 1 bis 6, bei der das Ferninstrument ein chirurgischer Laser ist.

**Revendications**

1. Dispositif d'affichage tête haute d'information en rapport avec un instrument éloigné, utilisé en association avec un microscope (10) ayant un objectif de microscope (11), une paire d'oculaires (12) et une région de lumière dont les rayons sont essentiellement parallèles entre l'objectif (11) du microscope et la paire d'oculaires (12), ce dispositif d'affichage tête haute comprenant:

a) un diviseur de faisceau (15) disposé entre l'objectif (11) du microscope et la paire d'oculaires (12);

b) un dispositif d'affichage digital électronique (16a, 16b) de nombres en rapport avec un réglage de commande pour l'instrument éloigné;

c) le dispositif d'affichage digital (16a, 16b) étant disposé en dehors de l'axe optique du microscope (10); caractérisé par

d) un miroir convexe (20) disposé pour voir l'affichage digital (16a, 16b);

e) une lentille collimatrice (22) agencée pour rendre parallèles les rayons de lumière divergents provenant du miroir convex (20) dans le trajet vers le diviseur de faisceau (15); et

f) de la lumière à rayons parallèles provenant de la lentille (22), qui tombent sur le diviseur de faisceau (15) pour placer l'image de l'affichage digital (16a, 16b) dans une région marginale du champ apparent de l'un des oculaires de la paire (13).

2. Dispositif d'affichage tête haute suivant la revendication 1, comprenant une paire d'affichages digitaux (16a, 16b) écartés l'un de l'autre et orientés en sorte que les deux affichages digitaux soient vus par le miroir convexe (20).

3. Dispositif d'affichage tête haute suivant la revendication 2, comprenant un miroir déviateur (21) disposé entre la paire d'affichages digitaux (16a, 16b) pour diriger de la lumière divergente du miroir convexe (20) vers la lentille collimatrice (22).

4. Dispositif d'affichage tête haute suivant la revendication 3, dans lequel les images de la paire d'affichages digitaux (16a, 16b) sont disposées dans des régions marginales opposées dudit champ apparent.

5. Dispositif d'affichage tête haute suivant la revendication 4, dans lequel lesdites régions marginales opposées sont disposées au-dessus et en dessous du champ apparent.

6. Dispositif d'affichage tête haute suivant la revendication 1, dans lequel la lumière à rayons parallèles provenant de la lentille (22) entre par le bas du diviseur de faisceau (15), et la lumière pour un dispositif auxiliaire (13) sort par le haut du diviseur de faisceau (15).

7. Dispositif d'affichage tête haute d'une combinaisons quelconque suivant les revendications 1—6, dans laquelle l'instrument éloigné est un laser chirurgical.

_10_

AUXILIARY
ATTACHMENT
_13_

_15_

BINOCULARS
_12_

MICROSCOPE
OBJECTIVE
_11_

_22_

_20_    _21_

_16b_    _16a_

**FIG. 1**

AUXILIARY
ATTACHMENT
_13

_10

_15

MICROSCOPE
OBJECTIVE
_11

BINOCULARS
_12

_22

_21
_20

_16a
_16b

# FIG. 2

FIG. 3